# EUROPÄISCHE PATENTSCHRIFT

(11) **EP 1 565 718 B1**
(45) Veröffentlichungstag und Bekanntmachung des Hinweises auf die Patenterteilung: **03.03.2010**
(21) Anmeldenummer: 03767464.5
(22) Anmeldetag: 26.11.2003
(51) Int. Cl.: G01M 11/00, H04B 10/08

(54) **VERFAHREN UND ANORDNUNG ZUR ERMITTLUNG VON FEHLSTELLEN IN OPTISCHEN FASERN**
METHOD AND DEVICE FOR ASCERTAINING DEFECTS IN OPTICAL FIBERS
PROCEDE ET DISPOSITIF PERMETTANT DE DECELER LES DEFAUTS DE FIBRES OPTIQUES

(30) Priorität: 27.11.2002 DE 10255528
(43) Veröffentlichungstag der Anmeldung: 24.08.2005
(73) Patentinhaber: Fibotec Fiberoptics GmbH, 98617 Meiningen (DE)
(72) Erfinder: WERNER, Gerald, 98617 Meiningen (DE); WERNER, Mario, 98617 Obermassfeld (DE); SCHIEMANN, Stephan, 98617 Meiningen (DE)
(74) Vertreter: Liedtke, Klaus
(86) Internationale Anmeldenummer: PCT/DE2003/003924
(87) Internationale Veröffentlichungsnummer: WO 2004/048920

(56) Entgegenhaltungen:
- WO-A1-97/20196
- GB-A- 2 190 186
- US-A- 5 453 865
- US-A- 6 075 628
- RALF KORIES; HEINZ SCHMIDT-WALTER: 'Taschenbuch der Elektrotechnik', 1998, VERLAG HARRI DEUTSCH, THUN UND FRANKFURT AM MAIN XP001167228 * Seite 408 * * Seite 460 *

## Beschreibung

Die Erfindung betrifft ein Verfahren und eine Anordnung zur räumlichen Ermittlung von Fehlstellen in optischen Fasern, bei dem durch synchrones Senden und Empfangen von Pulsfolgen, die über einen gemeinsamen Takt gesteuert werden, eine zeitliche Analyse des Pulsechos erfolgt, wobei diese Pulsfolgen in einer Lichtquelle in optische Pulse umgewandelt werden.

Unter Fehlstellen werden hierbei Unstetigkeiten verstanden, die vorzugsweise an Koppelstellen optischer Komponenten sowie an Bruch- und Reflexionsstellen in den Fasern entstehen.

Im Stand der Technik ist es bekannt, zur Lokalisation und Charakterisierung von Brüchen und Verluststellen in optischen Fasern, faseroptischen Komponenten oder optischen Netzwerken Puls-Echo-Reflektometer (OTDR - Optical Time Domain Reflectometer) einzusetzen. Als Probesignale dienen dabei in der Regel kurze Einzelpulse hoher Energie.
Alternativ zur Verwendung hochenergetischer Einzelpulse ist der Einsatz von niederenergetischen Pseudo-Zufalls-Pulsfolgen in solchen Geräten vorgeschlagen und auch in der Vergangenheit von einigen Herstellern realisiert worden. Dem Vorteil bei der Verwendung von Pseudo-Zufalls-Pulsfolgen - den geringen Kosten für die Laserquelle - steht ein erhöhter Aufwand bei der Detektion und Auswertung der reflektierten Puls-Echos gegenüber.
Derartige Anordnungen sind beschrieben in
M. Tateda "Advances in Optical Time-Domain Reflectometry", IEEE JLT 7 (1989) 1217 sowie in
F. J. Mendieta "Complementary Sequence Correlations with Applications to Reflectrometry Studies", Instrumentation and Development 3 (1996) 37.

Bei den Korrelations-OTDRs wird die Autokorrelation der Signale in der Regel über eine Multiplikation und Integration berechnet, was digital einer AND-Verknüpfung entspricht. In diesem Fall ergeben sich Schwierigkeiten durch Nebenmaxima im Autokorrelationssignal und die Interpretation der reflektierten Signale wird erschwert. Zur Überwindung dieser Schwierigkeiten ist in WO 97 / 20196 ein Verfahren zur Überwachung von faseroptischen Systemen beschrieben, bei dem mit einem Zufallsgenerator spezielle Pseudo-Zufalls-Codes erzeugt werden. Dies erfordert jedoch aufwendige Berechnungs- und Auswertungsmechanismen.

Aus der US-A-6 075 628 ist ein optisches Transmissionssystem bekannt, das einen Sender und einen Empfänger umfasst, die durch einen optischen Pfad verbunden sind, der Verstärkerstationen und ein Reflektometer zur Ortsbestimmung optischer Fehlerstellen im Pfad aufweist. Gesendete Signale werden an einer Verstärkerstation vom Pfad abgegriffen mittels einer Korrelationstechnik verarbeitet, um die relative Laufzeit von Reflexionen an einer Fehlerstelle zu ermitteln und so den Ort des Fehlers zu bestimmen.

Aus der GB A 2 190 186 ist ein Verfahren bekannt, bei dem eine pseudozufällige Bitfolge auf eine Lichtquelle aufmoduliert wird. Dieser modulierte Strahl wird über eine optische Faser oder ein anderes Material gesendet. Das zurückgestreute Signal wird mit einer digital verzögerten Referenzversion der gesendeten Sequenz multipliziert. Durch Variieren der Verzögerung zwischen der gesendeten Pseudozufallssequenz und der Referenz-Pseudozufallssequenz kann räumliche Information gewonnen werden, die verglichen mit herkömmlicher optischer Zeitbereichs-Reflektometrie ein verbessertes Signal-Rausch-Verhältnis aufweist.

Der Erfindung liegt die Aufgabe zugrunde, ein Verfahren und eine Anordnung der eingangs genannten Art anzugeben, das es ermöglicht, Puls-Echo Reflektometer mit Pseudo-Zufalls-Pulsfolgen zu betreiben, ohne dass aufwendige Berechnungen oder spezielle Pseudo-Zufalls-Codes erforderlich wären.

Erfindungsgemäß wird die Aufgabe mit einem Verfahren, welches die in Anspruch 1 angegebenen Merkmale und mit einer Anordnung, welche die in Anspruch 7 angegebenen Merkmale enthält, gelöst.

Eine vorteilhafte Ausgestaltung des erfindungsgemäßen Verfahrens ist im Unteranspruch 2 angegeben.

Bei einem erfindungsgemäßen Verfahren zur räumlichen Ermittlung von Fehlstellen in faseroptischen Strecken erfolgt durch synchrones Senden und Empfangen von digitalen, binären Pulsfolgen, die über einen gemeinsamen Takt gesteuert werden, eine zeitliche Analyse des Pulsechos. Diese Pulsfolgen werden mit dem Takt einerseits in einer Lichtquelle in optische Pulse umgewandelt und emittiert und andererseits gleichzeitig in einer Steuerlogik digital in die erste Stufe eines Schieberegisters mit n Stufen, dessen Inhalt zuvor um eine Stufe verschoben wurde, eingespeist. Zum Vergleich von Teilmustern der emittierten Pulsfolge mit Teilmustern der reflektierten und in einer Digitalisierungselektronik digitalisierten Pulsechofolge wird simultan nach jeder Stufe des Schieberegisters, dessen Inhalt mit dem aktuellen Wert des Pulsechos über n XOR-Gatter verknüpft wird, das Ergebnis der XOR-Verknüpfungen dann in n zugehörigen Auf- / Abzählern gezählt. Die Digitalisierung wird mit einer Quantisierungsauflösung von genau einem Bit durchgeführt.Das der Digitalisierungsstufe zugeführte, analoge Signal besitzt ein Signal-Rausch-Verhältnis kleiner 1, indem dem analogen Signal das Signal eines Rauschgenerators aufmoduliert wird.

Eine erfindungsgemäße Anordnung zur Ermittlung von Fehlstellen in optischen Fasern umfasst eine an die faseroptische Strecke angekoppelte amplitudenmodulierbare Lichtquelle zum Senden von beliebigen Pseudo-Zufalls-Pulsfolgen, einen Taktgeber, einen Zufallsgenerator, einen optischen Detektor, eine Digitalisierungselektronik mit einer Quantisierungsauflösung von genau einem Bit und eine Ankopplung an die faseroptische Strecke zum Empfangen der Pulsechos, sowie eine auf XOR-Gattern, einem Schieberegister und Auf- /Ab-Zählern basierende Steuerlogik zur Auswertung der empfangenen Pulse sowie einer Ankopplung eines Ein-/Ausgabegerätes an die Steuerlogik. Das Schieberegister besteht aus n Stufen. Zu jeder Stufe des Schieberegisters ist jeweils ein XOR-Gatter und jeweils ein Auf- /Ab-Zähler angeordnet. Jede Stufe ist mit dem ersten Eingang des jeweiligen XOR-Gatters verbunden. Der Ausgang des jeweiligen XOR-Gatters ist mit dem Eingang des jeweiligen Auf- /Ab-Zählers verbunden, während der zweite Eingang des jeweiligen XOR-Gratters mit dem Ausgang der Digitalisierungselektronik verbunden ist. Die erste Stufe des Schieberegisters ist mit dem Ausgang des Zufallsgenerators verbunden ist. Es ist ein Rauschgenerator angeordnet, dessen Signal dem der Digitalisierungselektronik zugeführten, analogen Signal aufmoduliert wird.

Die vorliegende Erfindung ersetzt die Autokorrelation (AND-Verknüpfung) durch einen Mustervergleich (XOR-Verknüpfung) und eine integrierte Mittelung in Zählregistern. Dadurch lassen sich beliebige Pseudo-Zufalls-Codes einsetzen. Selbst eine Nicht-Gleichverteilung der "O" und "1" Zustände in den Pseudo-Zufalls-Codes ist tolerierbar.
Das erfindungsgemäße Verfahren erlaubt den Aufbau in Echtzeit arbeitender und kostengünstiger Reflektometer, die z. B. als Online-Überwachungssysteme in optische Netzwerke oder optische Fasersensoren integriert werden können.

Die simultane Identifikation mehrerer Reflexe ist durch die mehrstufige Speicherung der ausgesandten Pulse möglich.

Durch die Verwendung einfacher digitaler Bauelemente in einer einfachen Schaltung ist eine schnelle Messung mit theoretisch unendlich hoher Dynamik möglich.

Weiterhin ist durch den XOR-Vergleich sichergestellt, dass die Nulllinie sich bei Pseudo-Zufalls-Codes mit Gleichverteilung der Zustände "0" und "1" nicht verschiebt und somit die Mittelwertfreiheit bei der digitalen Mittelung im Auf/Abzähler gesichert ist. Hiermit lassen sich auch sehr kleine Fehlstellensignale im Rauschuntergrund aufspüren und die hohe Dynamik des Verfahrens praktisch realisieren.

Ein weiterer Vorteil der Erfindung ergibt sich durch die dem Mustervergleich vorgeschaltete 1-bit-Digitalisierung der reflektierten Signale. Die Auswertung der Signale ist unempfindlich gegenüber z. B. Amplitudenmodulationen der Signale, so dass die Beschränkung auf spezielle Wellenlängen beim Probe-Signal - wie z. B. in WO 98/16027 beschrieben - entfällt.

Die Verwendung eines mehrstufigen Schieberegisters, dessen Inhalt auf jeder Stufe simultan mit dem gerade empfangenen Puls verglichen und die Vergleichsergebnisse gezählt werden, ermöglicht eine hohe Verarbeitungsgeschwindigkeit, somit eine hohe Betriebsfrequenz und dadurch ein hohes Ortsauflösungsvermögen der Messung.

Ein Neustart der Zählung bei Zählerüber- oder unterläufen unter Speicherung der in diesem Moment angesammelten Vergleichsergebnisse ermöglicht eine Auswertung mit guter statistischer Aussagekraft.

Insbesondere dadurch, dass dem der Digitalisierungsstufe zugeführten, analogen Signal das Signal eines Rauschgenerators aufmoduliert wird, kann das Signal-Rausch-Verhältnis immer kleiner als 1 gehalten werden und damit die Detektion von mehreren Fehlstellen gleichzeitig ermöglicht werden.

Durch eine variable Vorverzögerung vor dem Schieberegister kann der Anfang des Messbereichs, dessen Breite und Auflösung von der Anzahl der Registerstufen und der Taktfrequenz abhängen, verschoben werden, so dass eine beliebige Länge der faseroptischen Strecke sukzessive durchgemessen werden kann.

Gemeinsam mit einer Variation der Taktfrequenz ist die Messung mit veränderter, vorzugsweise vergrößerter Ortsauflösung an Stellen möglich, von denen die Existenz von Fehlstellen ungefähr bekannt ist, beispielsweise aus einer vorhergehenden, gröberen Messung.

Mittels eines Ein-/Ausgabegerät, das die Steuerlogik nach Bedarf einstellen kann und die Messergebnisse auswertet, indem mittels der zu den Schieberegisterstufen gehörenden Auf- /Ab-Zähler (45) die Zeitversätze zwischen Pulsemission und Pulsechos ermittelt und darauf die Entfernungen der Orte in der faseroptischen Strecke, die diese Echos erzeugt haben, ausgibt, ist die Suche nach Fehlstellen einfachst und auch ohne Fachkenntnisse möglich.

Indem die Steuerlogik (40) einen eventuellen Basisliniendrift in den Zählern bei Verwendung von Pseudo-Zufalls-Zahlen mit Nicht-Gleichverteilung der Zustände "0" und "1" während der Messungen korrigiert, wird der Messfehler deutlich verringert.

Besteht das Schieberegister aus 200 bis 400 Stufen, so ist über einen breiten Frequenzbereich eine genügend hohe Ortsauflösung gewährleistet.

Insbesondere bei Taktfrequenzen von 50 bis 100 MHz ist eine schnelle und dennoch genaue Messung unter Verwendung kostengünstiger Elektronikbauteile möglich.

Haben die Auf- /Ab-Zähler eine Breite von 16 Bit, so ist mit kostengünstigen Bauteilen eine für zuverlässige Messungen genügende Länge von Pulssequenzen auch bei mehreren Verluststellen innerhalb des Messbereiches auswertbar.

Die Erfindung wird im Folgenden anhand eines Ausführungsbeispieles näher erläutert.

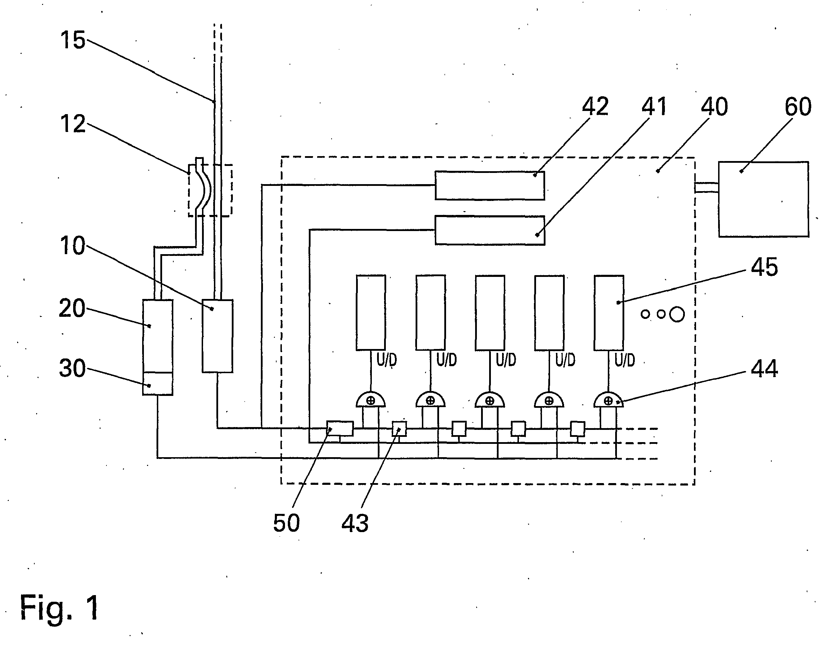

In der zugehörigen Zeichnung zeigt Figur 1 ein Blockschaltbild der Anordnung.

Die Anordnung verfügt über eine amplitudenmodulierbare Lichtquelle 10, die mit der Ankopplung 12 an die faseroptische Strecke 15 angeschlossen ist. Von der Lichtquelle 10 werden Pseudo-Zufalls-Pulsfolgen ausgesendet, welche in einem optischen Detektor 20 ausgewertet werden. Im optischen Detektor 20 ist eine 1-bit-Digitalisierungselektronik 30 integriert. Er ist mittels der Ankopplung 12 zum Empfangen der Pulsechos mit der faseroptischen Strecke 15 verbunden. Die Anordnung enthält ferner eine Steuerlogik 40 zur Erzeugung, Steuerung und Auswertung der ausgesendeten und empfangenen Pulse, das mit einem Ein- / Ausgabegerät 60 gekoppelt ist und so die zeitliche und räumliche Analyse des Pulsechos ermöglicht. Das Senden und Empfangen der Pulsfolgen erfolgt synchron und wird von einem gemeinsamen Taktgeber 41 gesteuert.

Es können beliebige digitale Pseudo-Zufalls-Pulsfolgen verwendet werden, beispielsweise in Echtzeit über rückgekoppelte Schieberegister erzeugte oder gespeicherte Folgen, die vom Zufallsgenerator 42 periodisch abgerufen werden. Diese Pulsfolgen werden in der Lichtquelle 10 in optische Pulse umgewandelt, emittiert und gleichzeitig in der Steuerlogik in das Schieberegister 43 mit n Stufen eingespeist. Zum Vergleich von Teilmustern der emittierten Pulsfolge mit Teilmustern der reflektierten und digitalisierten Pulsechofolge wird nach jeder Stufe des Schieberegisters 43 dessen Inhalt mit dem aktuellen Wert des Pulsechos über eines der n XOR-Gatter 44 verknüpft. Das Ergebnis der XOR-Verknüpfung lässt dann den zugehörigen Auf-/Ab-zähler 45 auf- oder abzählen. Die Auf-/Ab-Zähler 45 werden vorzugsweise mit 16 bit Tiefe ausgeführt. Werden identische Teilmuster gefunden und die entsprechenden Zähler z. B. hochgezählt, so geben die zum Zähler gehörenden Stufen des Schieberegisters 43 direkt den Zeitversatz zwischen Pulsemission und Pulsecho an, woraus auf die Orte im Fasernetzwerk geschlossen werden kann, die diese Echos erzeugt haben.
Das der Digitalisierungsstufe zugeführte analoge Signal besitzt ein Signal-Rausch-Verhältnis kleiner 1.
Die Amplitude der Pulsechos bei der Messung ergibt sich durch den mittleren Zählerstand in den einzelnen Auf/Ab-Zählern 45 nach Durchlauf einer geeignet langen Folge von Pseudo-Zufallszahlen. Ohne Pulsecho liefert das Rauschen am Detektoreingang ini Mittel kein Zählen der Auf/Ab-Zähler 45 in eine bestimmte Richtung. Erreicht ein Zähler bei Pulsechomessungen seinen Maximal- oder Minimalwert, so werden von der Steuerlogik die aktuellen Zählerstände gespeichert und alle Zähler auf Null zurückgesetzt. Auch korrigiert die Steuerelektronik ggf. einen Basislinendrift in den Zählern während der Messungen, der durch eine ungleiche mittlere Verteilung von Nullen und Einsen in den Pseudo-Zufalls-Pulsfolgen entsteht. Die Ausgabe der aktuellen sowie der gespeicherten Zählerstände an ein Ausgabegerät 60 ist jederzeit möglich. Aus Ausgabegeräte können Schreiber, Computer und dergleichen verwendet werden.
Bei praktisch allen Arten von Pseudo-Zufalls-Pulsfolgen (so z. B. bei Maximallängen-Schieberegister-Sequenzen) sind identische Teilmuster bei einem Vergleich in der Steuerlogik (XOR-Gatter 44 und Auf-/Ab-Zähler 45) immer nur 1 bit breit, d.h. die Pulsechos eines Ortes werden nur von einem Auf/Ab-Zähler 45 registriert. Eine Variation der Frequenz der emittierten Pseudo-Zufalls-Pulsfolgen und eine Variation einer Vorverzögerung 50 vor den n Schieberegisterstufen durch die Steuerlogik ist möglich. So können einzelne Orte entlang des Fasernetzwerks von der Logik gezielt mit hoher Ortsauflösung vermessen werden. Dies geschieht entweder automatisch durch die Steuerlogik selbst oder nach Anforderung über die Ein/Ausgabeeinheit 60.

Die erfindungsgemäße Anordnung kann kostengünstig hergestellt werden durch den Einsatz programmierbarer Logik-Bausteine (PLDs), handelsüblicher Laser und Detektoren für LAN/WAN-Anwendungen (Wellenlängenbereich 800 bis 1600 nm) und SONET Verstärker- und Treiberschaltungen. Die Wellenlänge der verwendeten Lichtquelle wird an die benötigte Empfindlichkeit angepasst, z. B. zur Vermessung von Faserknickstellen.

Die 1-bit-Digitalisierungselektronik 30 besteht typischerweise aus den Komponenten Transimpedanzverstärker, Begrenzer-Verstärker und TTL-Komparator. Um ein Signal-Rausch-Verhältnis kleiner Eins auch bei optischen Rückreflexen starker Intensität oder stark wechselnder Intensität sicherzustellen, wird dem Detektorsignal vor dem Transimpedanzverstärker das Signal eines Rauschgenerators mit programmierbarer Amplitude aufmoduliert.
Die Steuerlogik enthält vorzugsweise 200 bis 400 Auf- / Ab-Zähler 45, das Reflektometer besitzt bei 50 bis 100 MHz Taktfrequenz eine Ortsauflösung im Bereich weniger Meter.

Natürlich können auch andere Taktfrequenzen und/oder Zähler- beziehungsweise Registerstufenanzahlen verwendet werden, insbesondere mit dem Fortschritt der Digitalelektronik mehr Stufen und höhere Taktfrequenzen.

### BEZUGSZEICHENLISTE

- 10: Lichtquelle
- 12: Ankopplung
- 15: Faseroptische Strecke
- 20: Optischer Detektor
- 30: Digitalisierungselektronik
- 40: Steuerlogik
- 41: Taktgeber
- 42: Zufallsgenerator
- 43: Schieberegister
- 44: XOR-Gatter
- 45: Auf/Abzähler
- 50: Vorverzögerung
- 60: Ein-/Ausgabegerät

## Patentansprüche

1. Verfahren zur räumlichen Ermittlung von Fehlstellen in faseroptischen Strecken (15), bei dem durch synchrones Senden und Empfangen von digitalen, binären Pulsfolgen, die über einen gemeinsamen Takt gesteuert werden, eine zeitliche Analyse des Pulsechos erfolgt, wobei diese Pulsfolgen mit dem Takt einerseits in einer Lichtquelle (10) in optische Pulse umgewandelt und emittiert werden und andererseits gleichzeitig in einer Steuerlogik (40) digital in die erste Stufe eines Schieberegisters (43) eingespeist werden und zum Vergleich von Teilmustern der emittierten Pulsfolge mit Teilmustern der reflektierten und in einer Digitalisierungselektronik (30) digitalisierten Pulsechofolge simultan nach jeder Stufe des Schieberegisters (43), dessen Inhalt mit dem aktuellen Wert des Pulsechos über n Gatter verknüpft wird, das Ergebnis der Verknüpfungen dann in n zugehörigen Zählern gezählt wird, **dadurch gekennzeichnet, dass** die Gatter als XOR-Gatter (44) ausgebildet sind, wobei die Zähler als Auf- /Abzähler (45) ausgebildet sind, wobei das Schieberegister (43) aus n Stufen besteht, wobei der Inhalt des Schieberegisters (43) vor dem Einspeisen der Pulsfolgen um eine Stufe verschoben wird, wobei die Digitalisierung mit einer Quantisierungsauflösung von genau einem Bit durchgeführt wird und das der Digitalisierungselektronik (30) zugeführte, analoge Signal ein Signal-Rausch-Verhältnis kleiner 1 besitzt, indem dem analogen Signal das Signal eines Rauschgenerators aufmoduliert wird.

2. Verfahren nach Anspruch 1, **dadurch gekennzeichnet, dass** auf jeder Stufe des Schieberegisters (43) mittels jeweils eines XOR-Gatters (44) ein Bit der Pulsfolge mit dem digitalisierten Wert des Pulsechos verglichen und das Ergebnis auf jeder Stufe mittels des Auf- / Abzählers (45) gezählt wird, bis ein Zähler seinen Minimal- oder Maximalwert erreicht, woraufhin von der Steuerlogik (40) die Zählerstände gespeichert und alle Zähler (45) auf Null zurückgesetzt werden.

3. Verfahren nach einem der vorhergehenden Ansprüche, **dadurch gekennzeichnet, dass** eine variable Vorverzögerung (50) vor dem Schieberegister (43) vorgenommen wird.

4. Verfahren nach einem der vorhergehenden Ansprüche, **dadurch gekennzeichnet, dass** durch eine Variation der Frequenz der emittierten Pulsfolgen und durch eine Variation der Vorverzögerung (50) vor den Schieberegistern (43) einzelne Orte entlang der optischen Faser gezielt mit hoher Ortsauflösung vermessen werden.

5. Verfahren nach einem der vorhergehenden Ansprüche, **dadurch gekennzeichnet, dass** ein an die Steuerlogik (40) angekoppeltes Ein-/Ausgabegerät (60) aus den Inhalten und der Reihenfolge der zu den Schieberegisterstufen gehörenden Auf- /Abzähler (45) die Zeitversätze zwischen Pulsemission und Pulsechos ermitteln und darauf die Entfernungen der Orte in der faseroptischen Strecke ausgibt, die diese Echos erzeugt haben.

6. Verfahren nach einem der vorhergehenden Ansprüche, **dadurch gekennzeichnet, dass** die Steuerlogik (40) einen Basisliniendrift in den Zählern während der Messungen korrigiert.

7. Anordnung zur Ermittlung von Fehlstellen in optischen Fasern mit einer an die faseroptische Strecke (15) angekoppelten amplitudenmodulierbaren Lichtquelle (10) zum Senden von beliebigen Pseudo-Zufalls-Pulsfolgen, einem Taktgeber (41), einem Zufallsgenerator (42), einem optischen Detektor (20), Digitalisierungselektronik (30) und einer Ankopplung (12) an die faseroptische Strecke (15) zum Empfangen der Pulsechos, sowie einer auf Gattern, einem Schieberegister (43) und Zählern basierenden Steuerlogik (40) zur Auswertung der empfangenen Pulse sowie einer Ankopplung eines Ein-/Ausgabegerätes (60) an die Steuerlogik (40), wobei zu jeder Stufe des Schieberegisters (43) jeweils ein Gatter und jeweils ein Zähler angeordnet ist, wobei jede Stufe mit dem ersten Eingang des jeweiligen Gatters verbunden ist und der Ausgang des jeweiligen Gatters mit dem Eingang des jeweiligen Zählers verbunden ist, während der zweite Eingang des jeweiligen Gatters mit dem Ausgang der Digitalisierungselektronik (30) verbunden ist, und die erste Stufe des Schieberegisters (43) mit dem Ausgang des Zufallsgenerators (42) verbunden ist, **dadurch gekennzeichnet, dass** die Gatter als XOR-Gatter (44) ausgebildet sind, wobei die Zähler als Auf- /Abzähler (45) ausgebildet sind, wobei das Schieberegister (43) aus n Stufen besteht, wobei die Digitalisierungselektronik (30) eine Quantisierungsauflösung von genau einem Bit aufweist, wobei ein Rauschgenerator angeordnet ist, dessen Signal dem der Digitalisierungselektronik (30) zugeführten, analogen Signal aufmoduliert wird

8. Anordnung nach Anspruch 7, **dadurch gekennzeichnet, dass** zwischen dem Zufallsgenerator (42) und dem Schieberegister (43) ein Verzögerungselement (50) angeordnet ist.

9. Anordnung nach Anspruch 7 oder 8, **dadurch gekennzeichnet, dass** das Schieberegister (43) aus 200 bis 400 Stufen besteht.

10. Anordnung nach einem der Ansprüche 7 bis 9, **dadurch gekennzeichnet, dass** der Taktgeber (41) eine Frequenz von 50 bis 100 MHz aufweist.

11. Anordnung nach einem der Ansprüche 7 bis 10, **dadurch gekennzeichnet, dass** die Auf/Abzähler (45) eine Breite von 16 Bit aufweisen.

## Claims

1. Procedure for the spatial determination of defects in fiber-optic links (15) in which, by the synchronous transmission and reception of digital, binary pulse trains controlled via a common clock pulse, a time analysis of the pulse echo is performed while, using the clock pulse, these pulse trains, on the one hand, are converted into optical pulses and emitted in a light source (10) and, the other hand, are fed digitally into the first stage of a shift register (43) in a control logic (40) at the same time and, to compare part patterns of the emitted pulse train with part patterns of the pulse echo sequence reflected and digitized in a digitization electronic (30) simultaneously after every stage of the shift register (43), whose content is linked to the current value of the pulse echo via n gates, the result of the links is then counted in n corresponding counters, **characterized in that** the gates are designed as XOR gates (44) with the counters being designed as up/down counters (45), with the shift register (43) consisting of n stages, where the content of the shift register (43) is shifted by one stage before feeding in the pulse trains, with digitization being performed with a quantization resolution of precisely one bit, and with the analogue signal fed to the digitization electronics (30) having a signal-to-noise ratio of less than 1, while the signal of a noise generator is modulated upon the analogue signal.

2. Procedure as claimed in claim 1, **characterized in that,** on every stage of the shift register (43), using one XOR gate (44) each, one bit of the pulse train is compared with the digitized value of the pulse echo and the result is counted on every stage using the up/down counter (45) until one counter reaches either its minimum value or its maximum value whereupon the control logic (40) stores the counter statuses and resets all counters (45) to zero.

3. Procedure as claimed in any preceding claim, **characterized in that,** a variable pre-delay (50) is performed before the shift register (43).

4. Procedure as claimed in any preceding claim, **characterized in that,** by the variation in the frequency of the pulse trains emitted and by a variation in the pre-delay (50) before the shift registers (43), single locations along the optical fiber are measured in a targeted manner at a high spatial resolution.

5. Procedure as claimed in any preceding claim, **characterized in that,** an input/output device (60) coupled to the control logic (40) uses the contents and the sequence of the up/down counters (45) belonging to the shift register stages to determine the time offsets between pulse transmission and pulse echo and, thereupon, outputs the distances of the locations in the fiber-optic link which have generated these echoes.

6. Procedure as claimed in any preceding claim, **characterized in that,** the control logic (40) corrects a baseline drift in the counters during the measurements.

7. Set-up for determining defects in optical fibers with an amplitude-modulable light source (10) coupled to the fiber-optic link (15) for sending any pseudo random pulse trains, a clock generator (41), a random generator (42), an optical detector (20), digitization electronics (30) and a coupling (12) to the fiber-optic link (15) for receiving the pulse echoes, and a control logic (40) based on gates, a shift register (43) and counters for evaluating the pulses received, and a coupling of an input/output device (60) to the control logic (40), while one gate each and one counter each is arranged for every stage of the shift register (43), while every stage is connected to the first input of the corresponding gate and the output of the corresponding gate to the input of the corresponding counter, while the second input of the corresponding gate is connected to the output of the digitization electronics (30) and the first stage of the shift register (43) is connected to the output of the random generator (42), **characterized in that,** the gates are designed as XOR gates (44), while the counters are designed as up/down counters (45), while the shift register (43) consists of n stages, while the digitization electronics (30) has a quantization resolution of precisely 1 bit, while a noise generator is arranged whose signal is modulated upon the analogue signal fed to the digitization electronics (30).

8. Set-up as claimed in claim 7, **characterized in that,** a delay element (50) is arranged between the random generator (42) and the shift register (43).

9. Set-up as claimed in claims 7 or 8, **characterized in that** the shift register (43) consists of 200 to 400 stages.

10. Set-up as claimed in any claims 7 through 9, **characterized in that** the clock generator (41) has a frequency of between 50 and 100 MHz.

11. Set-up as claimed in any claims 7 through 10, **characterized in that** the up/down counters (45) have a width of 16 bits.

## Revendications

1. Procédé pour la détermination spatiale de défauts dans des trajets de fibres optiques (15), où, par émission et réception synchrones de séquences d'impulsions numériques binaires commandées pendant un cycle commun, une analyse temporelle de l'écho d'impulsion est effectuée, lesdites séquences d'impulsions étant converties en impulsions optiques dans une source lumineuse (10) et émises tout en étant simultanément délivrées numériquement vers le premier étage d'un registre de décalage (43) dans une logique de commande (40), et où, pour la comparaison d'échantillons partiels de la séquence d'impulsions émise avec des échantillons partiels de la séquence d'échos d'impulsions réfléchie et numérisée dans une électronique de numérisation (30) simultanément après chaque étage du registre de décalage (43) dont le contenu est chaîné avec la valeur actuelle de l'écho d'impulsion au moyen de n portes, le résultat des chaînages est simultanément compté dans n compteurs correspondants, **caractérisé en ce que** les portes sont réalisées comme portes XOR (44), les compteurs étant réalisés comme compteurs positifs/négatifs (45), le registre de décalage (43) étant composé de n étages, le contenu du registre de décalage (43) étant décalé d'un étage avant délivrance des séquences d'impulsions, la numérisation étant effectuée avec une résolution de quantification d'un bit exactement et le signal analogique délivré à l'électronique de numérisation (30) présentant un rapport signal-bruit inférieur à 1, le signal d'un générateur de bruit étant modulé sur le signal analogique.

2. Procédé selon la revendication 1, **caractérisé en ce qu'**à chaque étage du registre de décalage (43), un bit de la séquence d'impulsions est comparé avec la valeur numérisée de l'écho d'impulsion au moyen d'une porte XOR respective (44), et le résultat compté à chaque étage au moyen du compteur positif/négatif jusqu'à ce qu'un compteur atteigne sa valeur minimale ou maximale, ce après quoi les niveaux de compteur sont mémorisés par la logique de commande (40), et tous les compteurs (45) ramenés à zéro.

3. Procédé selon l'une des revendications précédentes, **caractérisé en ce qu'**une temporisation variable (50) est appliquée avant le registre de décalage (43).

4. Procédé selon l'une des revendications précédentes, **caractérisé en ce que,** par variation de la fréquence des séquences d'impulsions émises et par variation de la temporisation (50) avant le registre de décalage (43), différents emplacements le long de la fibre optique sont mesurés avec une résolution locale élevée.

5. Procédé selon l'une des revendications précédentes, **caractérisé en ce qu'**un appareil d'entrée/de sortie (60) couplé à la logique de commande (60) détermine les décalages temporels entre l'émission d'impulsion et les échos d'impulsion à partir des contenus et de l'ordre des compteurs positifs/négatifs (45) correspondants aux registres de décalage, avant de sortir les distances des emplacements sur le trajet de fibre optique qui ont généré ces échos.

6. Procédé selon l'une des revendications précédentes, **caractérisé en ce que** la logique de commande (40) corrige une dérive de ligne de base dans les compteurs pendant les mesures.

7. Dispositif pour la détermination de défauts dans des fibres optiques, avec une source lumineuse (10) d'amplitude modulable couplée au trajet de fibre optique (15) pour l'émission de pseudo-séquences d'impulsions aléatoires quelconques, un générateur de cycles (41), un générateur de nombres aléatoires (42), un détecteur optique (20), une électronique de numérisation (30) et un couplage (12) au trajet de fibre optique (15) pour la réception des échos d'impulsions, une logique de commande (40) fondée sur des portes, un registre de décalage (43) et des compteurs pour l'évaluation des impulsions reçues, ainsi qu'un couplage d'un appareil d'entrée/de sortie (60)à la logique de commande (40), où, à chaque étage du registre de décalage (43) sont disposés une porte et un compteur respectifs, chaque étage étant relié à la première entrée de la porte correspondante et la sortie de la porte correspondante étant reliée à l'entrée du compteur correspondant, alors que la deuxième entrée de la porte correspondante est reliée à la sortie de l'électronique de numérisation (30), et le premier étage du registre de décalage (43) relié à la sortie du générateur de nombres aléatoires (42), **caractérisé en ce que** les portes sont réalisées comme portes XOR (44), les compteurs étant réalisés comme compteurs positifs/négatifs (45), le registre de décalage (43) étant composé de n étages, l'électronique de numérisation (30) présentant une résolution de quantification d'un bit exactement, un générateur de bruit étant prévu, dont le signal est modulé sur le signal analogique délivré à l'électronique de numérisation (30).

8. Dispositif selon la revendication 7, **caractérisé en ce qu'**un élément de temporisation (50) est disposé entre le générateur de nombres aléatoires (42) et le registre de décalage (43).

9. Dispositif selon la revendication 7 ou la revendication 8, **caractérisé en ce que** le registre de décalage (43) est composé de 200 à 400 étages.

10. Dispositif selon l'une des revendications 7 à 9, **caractérisé en ce que** le générateur de cycles (41) est doté d'une fréquence de 50 à 100 MHz.

11. Dispositif selon l'une des revendications 7 à 10, **caractérisé en ce que** les compteurs positifs/négatifs (45) présentent une largeur de 16 bits.
